# EUROPÄISCHE PATENTSCHRIFT

(11) **EP 0 678 955 B1**
(45) Veröffentlichungstag und Bekanntmachung des Hinweises auf die Patenterteilung: **02.09.1998**
(21) Anmeldenummer: 94110058.8
(22) Anmeldetag: 29.06.1994
(51) Int. Cl.: H02B 13/035

(54) **Metallgekapselte gasisolierte Schaltanlage**
Metal-clad gas-insulated switch installation
Appareillage de commutation blindé métallique à isolement gazeux

(30) Priorität: 19.04.1994 CH 1219/94
(43) Veröffentlichungstag der Anmeldung: 25.10.1995
(73) Patentinhaber: ASEA BROWN BOVERI AG, 5400 Baden (CH)
(72) Erfinder: Heil, Franz, CH-5406 Baden-Rütihof (CH); Berger, Ernst, CH-5507 Mellingen (CH); Schifko, Herbert, CH-8152 Glattbrugg (CH); Tecchio, Piero, CH-5452 Oberrohrdorf (CH)

(56) Entgegenhaltungen:
- DE-A- 1 540 527
- DE-A- 2 539 996
- DE-A- 2 540 058
- FR-A- 1 434 407
- FR-A- 1 440 652
- FR-A- 2 111 848
- GB-A- 993 722
- TECHN. MITT. AEG-TELEFUNKEN, Bd.67, Nr.5/6, 1977 HERBERT KARRENBAUER 'Vollisolierte Schaltanlagen für Betriebsspannungen von 420 und 525kV'
- BBC-NACHRICHTEN, Bd.53, Nr.1/2, Februar 1971 Seiten 3 - 14 WILLI J. SCHMITT 'Vollgekapselte, SF6-isolierte 110-kV-Schaltanlagen in der Energieversorgung.'

## Beschreibung

### TECHNISCHES GEBIET

Die Erfindung geht aus von einer metallgekapselten gasisolierten Schaltanlage gemäss dem Oberbegriff des Anspruchs 1.

### STAND DER TECHNIK

Es sind einphasig metallgekapselte gasisolierte Schaltanlagen bekannt, die ein Doppelsammelschienensystem aufweisen. In der Regel ist lediglich ein erstes der Sammelschienensysteme in Betrieb, während das zweite nur dann in Betrieb genommen wird, wenn Revisionen oder eine Störung im Bereich des ersten Sammelschienensystems ein Spannungsfreischalten dieses Systems erfordern.

Für eine Revision eines Leistungsschalterpols, beispielsweise in einer Phase eines Abgangsfeldes, wird die Löschkammer des betreffenden Leistungsschalterpols aus dem Polgehäuse aus Metall herausgezogen, dies ist jedoch nur dann zulässig, wenn die Anschlüsse des Leistungsschalterpols zuvor zuverlässig geerdet worden sind. Diese Erdung muss sowohl abgangsseitig als auch sammelschienenseitig erfolgen. Bei einem konventionellen Abgangsfeld einer metallgekapselten gasisolierten Schaltanlage, die mit einem Doppelsammelschienensystem versehen ist, ist für die sammelschienenseitige Erdung in der Regel auf beiden Seiten des Leistungsschalterpols einer Phase jeweils ein Erder nötig. Nach dem Herausziehen der Löschkammer sind diese beiden Erder nicht mehr metallisch verbunden, sodass eine vorschriftsmässige Erdung nur erreicht wird, wenn beide Erder, also auf jeder Seite des Leistungsschalterpols einer, geschlossen werden. Vor dem Schliessen der Erder werden selbstverständlich die entsprechenden Sammelschienentrennschalter, die jeweils zwischen dem Erder und der Sammelschiene angeordnet sind, geöffnet, sodass die Sammelschienen nach wie vor unter Spannung bleiben und einen ungestörten Betrieb der nicht von der Revision betroffenen Teile der gasisolierten Schaltanlage gewährleisten können.

Werden die Sammelschienentrennschalter als Längstrenner ausgebildet, die sich entlang einer Verbindungsachse erstrecken, so bedingt das einen vergleichsweise grossen Abstand der Sammelschienen von den Leistungsschalterpolen, was einen erhöhten Raumbedarf für die gasisolierten Schaltanlage zur Folge hat.

Die Offenlegungsschrift DE-A-2 540 058 zeigt ebenso wie die Offenlegungsschrift DE-A-2 539 996 eine dreiphasig metallgekapselte gasisolierte Hochspannungsschaltanlage bei welcher die Achsen der Leistungsschalter in einer ersten Ebene liegen, die senkrecht zu einem Fundament angeordnet ist. Die Leistungsschalter sind mit jeweils einer elektrisch leitenden Verbindung mit jedem der beiden Sammelschienensysteme verbunden. In dieser Verbindung zwischen der jeweiligen Sammelschiene und dem Leistungsschalter ist jeweils ein Trenner angeordnet. Die Achsen der beiden Sammelschienensysteme verlaufen parallel zur Fundamentfläche und liegen in jeweils einer zweiten und in einer dritten Ebene, die zueinander parallel verlaufen, wobei die erste Ebene, in welcher die Achsen der Leistungsschalter liegen, zwischen der zweiten und der dritten Ebene und parallel zu diesen Ebenen angeordnet ist. Die Verbindung zwischen den Sammelschienen und den Leistungsschaltern verlaufen senkrecht zu diesen Ebenen. Der Einbau von Erdern im Bereich der Sammelschienen, welche in der Regel zur Erhöhung der Betriebssicherheit der Hochspannungsschaltanlage beitragen, ist in diesen Offenlegungsschriften nicht erwähnt.

### DARSTELLUNG DER ERFINDUNG

Die Erfindung, wie sie in dem unabhängigen Anspruch 1 gekennzeichnet ist, löst die Aufgabe, eine metallgekapselte gasisolierte Schaltanlage zu schaffen, die weniger Erder benötigt und die einen besonders kleinen Raumbedarf aufweist.

Diese metallgekapselte gasisolierte Schaltanlage weist mindestens zwei Sammelschienensysteme auf und einen Leistungsschalter, der pro Pol jeweils eine Polachse und mindestens eine in ein Polgehäuse eingebaute Löschkammer aufweist. Die Polachsen des Leistungsschalters sind senkrecht zu der Fläche eines Fundaments angeordnet und liegen in einer ersten Ebene. Ferner weist die Schaltanlage jeweils eine entlang einer Verbindungsachse erstreckte elektrisch leitende Verbindung der spannungsführenden Löschkammer des jeweiligen Pols mit jedem der Sammelschienensysteme auf und jeweils einen in der Verbindung zwischen der jeweiligen Sammelschiene und dem Pol angeordneten Trenner. Diese metallgekapselte gasisolierte Schaltanlage weist einen besonders kleinen Raumbedarf auf. Dies wird dadurch erreicht, dass die Sammelschienenachsen der mindestens zwei Sammelschienensysteme parallel zur Fundamentfläche verlaufen und in jeweils einer zweiten und in einer dritten Ebene liegen, die zueinander parallel verlaufen, dass die erste Ebene, in welcher die Polachsen liegen, zwischen der zweiten und der dritten Ebene und parallel zu diesen angeordnet ist, und dass die Verbindungsachse senkrecht zu diesen Ebenen verläuft.

Die elektrisch leitende Verbindung zwischen den Sammelschienen bleibt auch nach dem Ausbau der Löschkammer aus dem Polgehäuse aufrecht erhalten. Die in der elektrisch leitenden Verbindung angeordneten Trenner weisen jeweils auf der dem Leistungsschalter zugewandten Seite einen Gegenkontakt auf. Diese Gegenkontakte liegen stets auf gleichem Potential und sind mittels eines zwischen dem Pol und dem Trenner angeordneten Erders an Erde legbar.

Ferner ist es vorteilhaft, sowohl im Hinblick auf die Kosten als auch im Hinblick auf den Zeitaufwand für die stets nötigen Wartungsarbeiten, dass bei einer mit einem Doppelsammelschienensystem ausgerüsteten Schaltanlage pro Phase einer der beiden im konventionellen Fall benötigten Sammelschienenerder nicht benötigt wird. Der Wegfall eines dieser Erder hat keinerlei nachteilige Folgen für die gasisolierte Schaltanlage, weder im Hinblick auf die Betriebsbsicherheit noch auf die Verfügbarkeit der Anlage.

Die Löschkammer des Leistungsschalters ist nach oben aus dem Polgehäuse ausfahrbar gestaltet. Der Leistungsschalter ist pro Pol mit einem separaten Antrieb ausgestattet, welcher nicht axial zur Polachse angeordnet ist. Der Antrieb ist oben neben dem Polgehäuse angeordnet, und zwar auf der dem Abgang zu einem Kabelanschluss, bzw. einer Einspeisung entgegengesetzten Seite des Polgehäuses.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine Seitenansicht eines Abgangsfeldes einer gasisolierten Schaltanlage,
Fig.2 eine Draufsicht auf ein Abgangsfeld einer gasisolierten Schaltanlage,
Fig.3 eine schematische Darstellung des in Fig.1 eingetragenen Schnittes A-A,
Fig.4 eine schematische Darstellung des in Fig.2 eingetragenen Schnittes B-B,
Fig.5 eine schematische Darstellung des in Fig.2 eingetragenen Schnittes C-C, und
Fig.6 eine schematische Darstellung des in Fig.2 eingetragenen Schnittes D-D.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

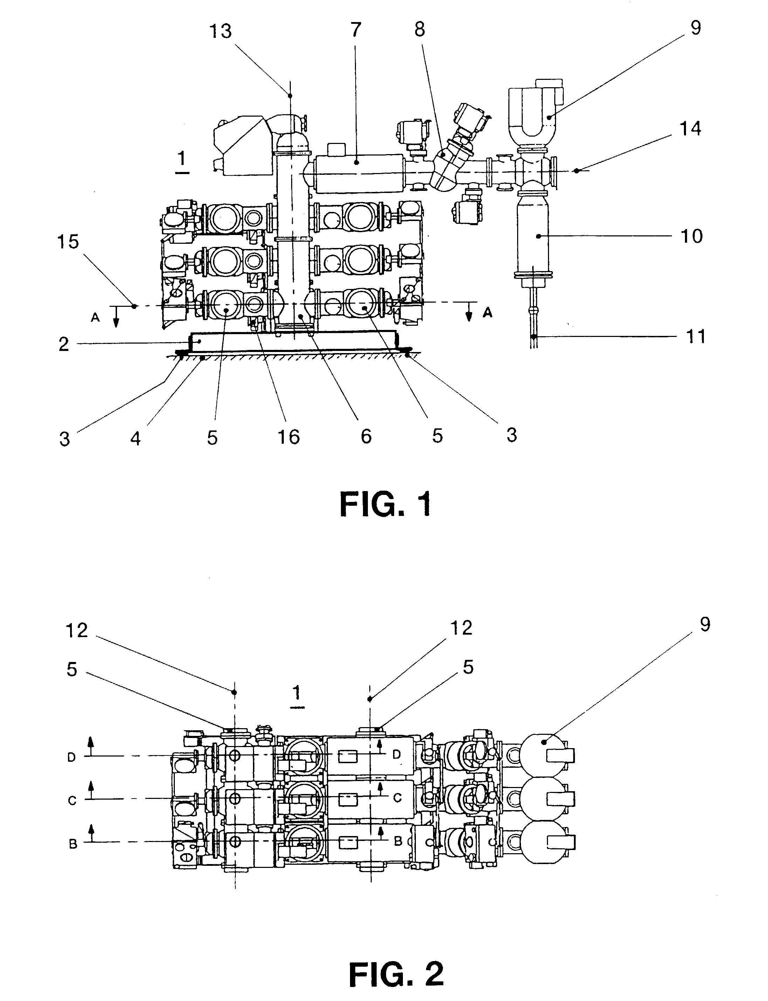

Die Fig.1 zeigt eine schematisch dargestellte Seitenansicht eines Abgangsfeldes 1 einer einphasig metallgekapselten gasisolierten Schaltanlage und die Fig.2 zeigt eine Draufsicht auf dieses Abgangsfeld 1. Dieses Abgangsfeld 1 weist einen Tragrahmen 2 auf, der aus einem Metallprofil gefertigt ist. Als besonders geeignete Metallprofile können beispielsweise I-Profile oder Rohrprofile aus Stahl eingesetzt werden. Die Rohrprofile weisen in der Regel einen runden oder einen rechteckigen Querschnitt auf. An den Ecken des Tragrahmens 2 sind Winkelprofile 3 angebracht, welche der Verbindung des Tragrahmens 2 mit einem Fundament 4 dienen. Diese Verbindung kann kraftschlüssig ausgebildet sein, sie kann jedoch auch ein Gleiten des Tragrahmens 2 auf einer in das Fundament 4 eingelassenen und hier nicht dargestellten Tragschiene zulassen. Bei diesem Typ einer metallgekapselten und gasisolierten Schaltanlage sind die Sammelschienen 5 senkrecht übereinander an einer oder an beiden Seiten der senkrecht gestellten Pole des Leistungsschalters 6 angeordnet. Der Abgang ist mit einem Stromwandler 7 versehen, dem ein Trenner 8, der die Funktion des Abgangstrenners übernimmt, nachgeschaltet ist. Beidseits des Trenners 8 ist jeweils ein Erder vorgesehen. Nach dem Trenner 8 ist ein Spannungswandler 9 vorgesehen. Ein Kabelanschluss 10 verbindet das abgehende Hochspannungskabel 11 mit der gasisolierten Schaltanlage. Ein für eine Einspeisung vorgesehenes Feld ist ähnlich ausgebildet wie das beschriebene Abgangsfeld 1.

Die Sammelschienen 5 weisen jeweils eine Sammelschienenachse 12 auf. Die Sammelschienenachsen 12 eines jeden der beiden Sammelschienensysteme liegen in einer Ebene senkrecht übereinander. Die Pole des Leistungsschalters 6 weisen jeweils eine Polachse 13 auf. Die Polachsen 13 der drei Leistungsschalterpole liegen in einer Ebene, die senkrecht zum Fundament 4 steht. Die Ebenen in denen die Sammelschienensysteme liegen und die Ebene in der die Polachsen 13 liegen, sind bei diesem Abgangsfeld 1 parallel zueinander angeordnet. Der vom jeweiligen Leistungsschalterpol wegführende Teil des Abgangsfelds 1, der Stromwandler 7, der Trenner 8 und das Gehäuse an welches der Kabelanschluss 10 angeflanscht ist, erstreckt sich entlang einer Längsachse 14. Die Längsachse 14 steht senkrecht auf der jeweiligen Polachse 13. Der vom Leistungsschalter 6 wegführende Teil des Abgangs kann sich in die Richtung, wie in Fig.1 dargestellt, erstrecken, er kann sich jedoch auch in die entgegengesetzte Richtung erstrecken. Der obere Teil des Polgehäuses lässt sich bei der Montage entsprechend ausrichten. In der Regel wird eine Drehung um 180° um die Polachse 13 vorgenommen, es ist aber auch möglich, den oberen Teil des Polgehäuses um einen Winkel im Bereich um 180° abzudrehen. Da der Leistungsschalter 6 pro Pol mit einem separaten Antrieb versehen ist, kann jeder der Pole unterschiedlich ausgerichtete Abgänge aufweisen.

Bei einem Speisefeld, welches ähnlich dem Abgangsfeld 1 aufgebaut ist, und bei welchem sich entlang der jeweiligen Längsachse 14 die Einspeisung erstreckt, beispielsweise bis hin zu Durchführungen, die mit einer Freileitung verbunden sind, wirkt sich diese Möglichkeit des Drehens des oberen Teils des Polgehäuses besonders vorteilhaft aus, da auf diese Art auch in Schaltanlagen mit beengten Raumverhältnissen für die Einführung der Frei leitung hinreichende Phasenabstände einfach zu realisieren sind.

Die Verbindung von dem jeweiligen Leistungsschalterpol zu den Sammelschienen erstreckt sich entlang einer Verbindungsachse 15. Aus der Fig.1 ist ersichtlich, dass bei diesem mit einem Doppelsammelschienensystem ausgerüsteten Abgangsfeld 1 nur ein Erder 16 pro Verbindung vorgesehen ist. Bei dieser gasisolierten Schaltanlage wird einer der in diesem Bereich normalerweise nötigen zwei Erder, ohne eine Einbusse an Sicherheit und ohne die Verfügbarkeit der Anlage zu reduzieren, eingespart. Der Erder 16 kann bei einer Schaltanlage mit Doppelsammelschienensystem wahlweise entweder auf der einen oder auf der anderen Seite des Leistungsschalterpols eingebaut werden.

Wird das Schaltfeld als Kuppelfeld aufgebaut, so reicht der auf der einen Seite des Leistungsschalterpols für den Erder vorgesehene Platz aus, um das Polgehäuse mit einem Deckel druckdicht zu verschliessen, für die Sammelschiene bleibt noch genug Platz, sodass auch in einem Kuppelfeld die Sammelschienenachse 12 unverändert im Vergleich zu den Speise- und den Abgangsfeldern beibehalten werden kann.

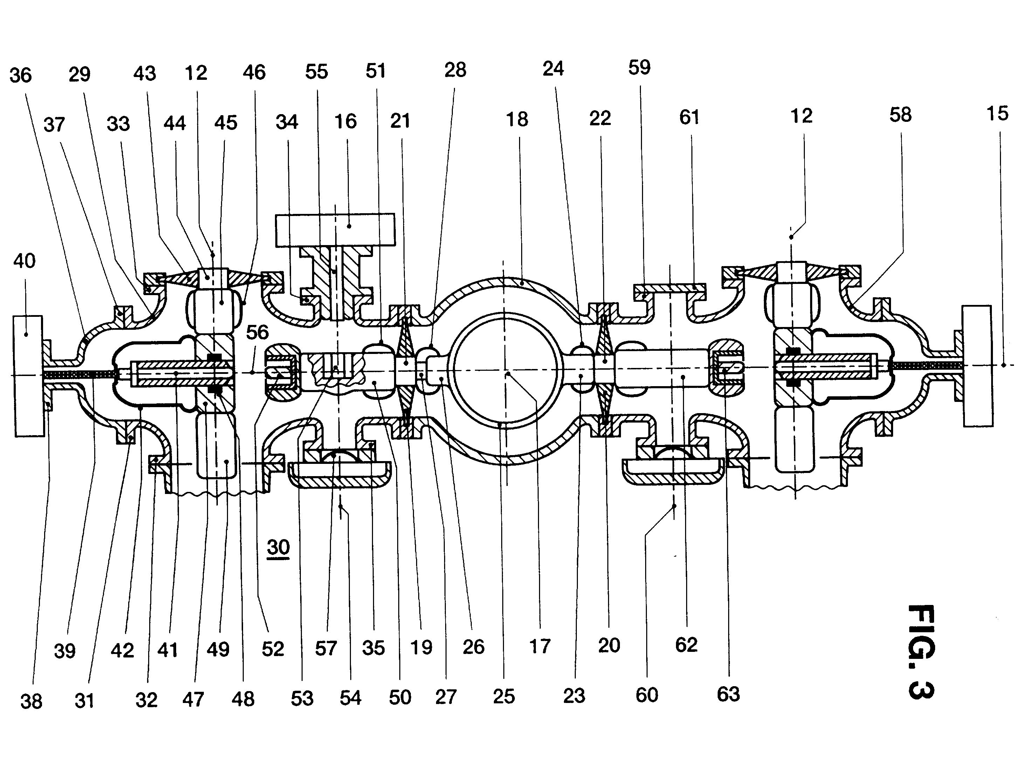

Die Fig.3 zeigt eine schematische Darstellung des in Fig.1 eingetragenen Schnittes A-A. Die Polachse 13 steht senkrecht auf der Schnittebene, sie durchstösst diese in einem zentralen Punkt 17. Ein zylindrisch ausgebildetes Gehäuseunterteil 18, welches sich entlang der Polachse 13 erstreckt, ist mit zwei auf der Verbindungsachse 15 als Zentrum liegenden, nicht bezeichneten Öffnungen versehen, die jeweils mit einem zylindrisch ausgebildeten, scheibenförmigen Schottungsisolator 19,20 druckdicht zugeflanscht sind. Der Schottungsisolator 19 weist einen ihn im Zentrum durchdringenden Stromanschluss 21 auf. Der Schottungsisolator 20 weist einen ihn im Zentrum durchdringenden Stromanschluss 22 auf. An den Stromanschluss 22 ist ein elektrisch leitendes Verbindungsstück 23 angeschraubt, welches von einer dielektrisch günstig gestalteten Abschirmung 24 umgeben ist. Das Verbindungsstück 23 ist mit einem Kontaktring 25 aus einem elektrisch gut leitfähigen Metall fest verschraubt. Das Verbindungsstück 23 und der Kontaktring 25 können auch einstückig ausgebildet sein. Der Kontaktring 25 weist auf der dem Verbindungsstück 23 gegenüberliegenden Seite eine mit ihm verschraubte Kontaktanordnung 26 auf. Der Stromanschluss 21 ist mit einem Kontaktträger 27 verbunden, der beispielsweise mit Spiralkontakten bestückt ist. Die Kontaktanordnung 26 umschliesst den Kontaktträger 27 und bildet mit ihm einen lösbaren Steckkontakt, der von einer dielektrisch günstig gestalteten Abschirmung 28 umgeben ist.

Der Mittelpunkt des Kontaktrings 25 fällt mit dem zentralen Punkt 17 zusammen. Die zylindrisch ausgebildete Innenfläche des Kontaktrings 25 ist mit mindestens einer nicht dargestellten Nut versehen, in welche ein nicht dargestellter Kunststoffring eingeklebt ist. Der Kunststoffring führt beim Einbau der Löschkammer das elektrisch leitende Auspuffgehäuse derselben, welches aussen mit elastischen Kontaktelementen bestückt ist, beispielsweise mit Spiralkontakten, die mit dem Kontaktring 25 einen elektrischen Kontakt herstellen, und er verhindert, dass die elastischen Kontaktelemente einer unsymmetrischen mechanischen Belastung unterworfen werden. Die innere Öffnung des Kontaktrings 25 wird durch das mit der Löschkammer verbundene Auspuffgehäuse vollständig verschlossen. Auf der dem Kontaktträger 27 entgegengesetzten Seite des Schottungsisolators 19 ist das Gehäuse 29 eines als Winkeltrenner ausgebildeten Trenners 30 druckdicht angeflanscht.

Das vereinfacht dargestellte Gehäuse 29 des Trenners 30 weist eine Wandung aus Metall auf. In der Regel wird das Gehäuse 29 druckdicht aus einer Aluminiumlegierung gegossen. Das Gehäuse 29 weist ausser der mit dem Schottungsisolator 19 verschlossenen Öffnung fünf weitere nicht bezeichnete mit Flanschen 31 bis 35 versehene Öffnungen auf. Das Gehäuse 29 weist zudem eine Längsachse auf, welche mit der Verbindungsachse 15 zusammenfällt. Die mit dem Flansch 31 versehene Öffnung wird bei der Trennermontage mit einer metallischen Abdeckung 36 versehen, die einen Flansch 37 aufweist, der mit dem Flansch 31 gasdicht verschraubt wird. Gegenüber dem Flansch 37 ist an der Abdeckung 36 ein weiterer Flansch 38 angebracht. Der Flansch 38 dient der Befestigung einer druckfesten Durchführung für eine bei einem Schaltvorgang des Trenners 30 in Richtung einer mit der Verbindungsachse 15 zusammenfallenden Betätigungsachse bewegbaren Isolierstoffstange 39. Die Isolierstoffstange 39 bewegt, durch einen ebenfalls mit dem Flansch 38 verbundenen Trennerantrieb 40 angetrieben, die, stark schematisiert dargestellte, bewegliche Kontaktanordnung 41 des Trenners 30. Die bewegliche Kontaktanordnung 41 ist von einer dielektrisch wirksamen Abschirmung 42 umgeben, die von der Isolierstoffstange 39 durchdrungen wird.

An den Flansch 32 ist ein nicht bezeichnetes Sammelschienengehäuse angeflanscht. An den Flansch 33 ist ein Schottungsisolator 43 angeflanscht, der von einem Stromanschluss 44 durchdrungen wird. An den Stromanschluss 44 ist ein Leiterstück 45 angeschraubt, welches isolatorseitig von einer dielektrisch wirksamen Abschirmung 46 umhüllt wird. Das Leiterstück 45 erstreckt sich längs der Sammelschienenachse 12, die senkrecht zur Verbindungsachse 15 verläuft. Das Leiterstück 45 ist mit einem ersten feststehenden Kontaktträger 47 des Trenners 30 elektrisch leitend verbunden. In den Kontaktträger 47 ist ein Gleitkontakt 48 eingelassen, der für den Stromübergang von der beweglichen Kontaktanordnung 41 des Trenners 30 auf den Kontaktträger 47 vorgesehen ist. Der Gleitkontakt 48 ist konzentrisch zur Verbindungsachse 15 angeordnet, er ist mit Kontaktfingern, mit Kontaktlamellen oder mit Spiralkontakten versehen. Der Kontaktträger 47 ist konzentrisch zur Verbindungsachse 15 angeordnet. Der Kontaktträger 47 ist gleichzeitig als Teil der Sammelschienenaktivteile ausgebildet. Auf der dem Leiterstück 45 gegenüberliegenden Seite des Kontaktträgers 47 ist ein weiteres Leiterstück 49 angebracht, welches sich entlang der Sammelschienenachse 12 durch die mit dem Flansch 32 versehene Öffnung erstreckt. Der Stromanschluss 21 ist mit einem zweiten feststehenden Kontaktträger 50 des Trenners 30 elektrisch leitend verbunden. Das isolatorseitige Ende des Kontaktträgers 50 ist mit einer dielektrisch wirksamen Abschirmung 51 abgedeckt. Das dem Kontaktträger 47 zugewandte Ende des Kontaktträgers 50 ist mit einem konzentrisch zur Verbindungsachse 15 angeordneten Gegenkontakt 52 für die bewegliche Kontaktanordnung 41 des Trenners 30 versehen. Die Kontaktträger 47 und 50 sind dielektrisch günstig ausgeformt, etwaige Kanten sind abgerundet ausgeführt. Die Stromanschlüsse 44 und 21 liegen im Betrieb auf Hochspannungspotential und sind gegenüber der Metallkapselung der gasisolierten Schaltanlage isoliert.

In den Kontaktträger 50 ist zudem ein tulpenförmig ausgebildeter Gegenkontakt 53 eingelassen, der konzentrisch zu einer Einbauachse 54 angeordnet ist und der den Kontaktstift 55 des Erders 16 aufnimmt, wenn der Erder 16 geschlossen wird. Die Einbauachse 54 steht senkrecht auf der Verbindungsachse 15. Zwischen dem Kontaktträger 47 und dem Gegenkontakt 52 besteht bei offenem Trenner 30 ein Abstand 56. Dieser Abstand 56 entspricht der Trennstrecke des Trenners 30 die im Betrieb allen an dieser Stelle auftretenden betriebsbedingten Spannungsbeanspruchungen standhält.

Beim Einschalten des Trenners 30 wird durch die durch den Trennerantrieb 40 betätigte Isolierstoffstange 39 die bewegliche Kontaktanordnung 41 entlang der Verbindungsachse 15 auf den Gegenkontakt 52 zu bewegt. Eine gegebenenfalls durch Restladungen und/oder durch eine zwischen dem Kontaktträger 47 und dem Gegenkontakt 52 anliegende betriebsfrequente Spannung hervorgerufene Vorzündung zwischen der beweglichen Kontaktanordnung 41 und dem Gegenkontakt 52 wird durch den Trenner 30 einwandfrei beherrscht. Eine Ausweitung des Vorzündlichtbogens hin zur Wand des Gehäuses 29 kann, bedingt durch die geometrische Anordnung des Kontaktträgers 47 und des Gegenkontakts 52 nicht auftreten. Der Trennerantrieb 40 ist so ausgelegt, dass er in jedem möglichen Betriebsfall die bewegliche Kontaktanordnung 41 sicher in die vorgesehene Einschaltstellung bewegt, sodass eine einwandfreie Stromführung über die dafür vorgesehenen, nicht näher beschriebenen Nennstromkontakte gewährleistet ist. Ebenso erfolgt auch das Öffnen des Trenners 30 stets einwandfrei.

Hier ist der Erder 16 in die mit dem Flansch 34 versehene Öffnung eingebaut. Er könnte jedoch auch alternativ in die mit dem Flansch 35 versehene Öffnung eingebaut werden. An den Flansch 35 können beispielsweise Detektoren für die Überwachung der gasisolierten Schaltanlage oder, wie in Fig.3 gezeigt, eine Berstscheibe 57 druckdicht angeflanscht werden, die im Fehlerfall eine Druckentlastung des Gehäuses 29 ermöglicht. Die beiden Flansche 34 und 35 weisen eine gemeinsame Einbauachse 54 auf.

Das auf der anderen Seite des Gehäuseunterteils 18 angeflanschte Gehäuse 58 entspricht mit beinahe sämtlichen Einbauteilen dem Gehäuse 29, es ist lediglich spiegelbildlich zu diesem angeordnet, und es ist kein Erder eingebaut. Die mit einem Flansch 59 versehene Öffnung, in welche ein entlang einer Einbauachse 60 erstreckter Erder eingebaut werden könnte, ist mittels eines Deckels 61 druckdicht verschlossen. Ebenso ist auch der Gegenkontakt des Erders nicht eingebaut worden. Mit dem Stromanschluss 22 ist auf der dem Verbindungsstück 23 abgewandten Seite ein Kontaktträger 62 elektrisch leitend verbunden, der einen Gegenkontakt 63 des rechts angeordneten Trenners trägt. Der Einbau eines zweiten Erders ist hier nicht nötig, da der Gegenkontakt 63 und der Kontaktträger 62 stets, dank des elektrisch leitenden Kontaktrings 25, auf dem gleichen Potential liegen wie der Kontaktträger 50 und der Gegenkontakt 52, sodass es vollauf genügt, wenn diese Aktivteile bei Bedarf gemeinsam mit Hilfe des einzigen Erders 16 sicher geerdet werden.

Der Trenner 30 kann in jeder beliebigen Einbaulage eingebaut werden, die durch das Anlagenkonzept der metallgekapselten gasisolierten Schaltanlage vorgegeben wird. Der Erder 16 kann ebenfalls lageunabhängig betätigt werden, sodass auch von daher keine Einbaubeschränkungen bestehen. Der Erder 16 kann sowohl als Arbeitserder als auch als Schnellerder ausgebildet sein. Die Baugruppe Trenner 30 mit vorgeschaltetem Erder 16 ist sehr kompakt ausgeführt und beansprucht in Richtung der Verbindungsachse 15 besonders wenig Platz, sodass das Schaltfeld mit besonders kleinen Abbmessungen ausgeführt werden kann.

Die offene Trennstrecke des Trenners ist mittels SF₆ höchstzuverlässig isoliert. Der Trenner weist im geschlossenen Zustand eine optimale Nennstromtragfähigkeit, eine sehr gute Kurzschlussstromtragfähigkeit und Stossstromfestigkeit auf. Ferner weist er ein zuverlässiges Schaltvermögen bei kleinen kapazitiven Strömen auf, er beherrscht zudem das Umschalten bei einem unterbrechungslosen Sammelschienenwechsel.

Der Trenner 30 weist getrennte Kontaktsysteme für die Dauerstromführung und für den eigentlichen Schaltvorgang auf. Die Dauerstromkontakte sind einfach und zuverlässig konstruiert, sie weisen eine minimale Anzahl von Einzelteilen auf. Die Kontaktbewegung erfolgt mittels eines elektrisch betriebenen, ausserhalb des mit SF₆-Gas gefüllten Trennergehäuses angeordneten Trennerantriebs, der Trenner kann jedoch auch von Hand angetrieben werden. Eine derartige Konfiguration erleichtert die Wartungsarbeiten sehr vorteilhaft. Der Trenner ist mit einer mechanisch gekoppelten Stellungsanzeige versehen, ferner kann ein Schauglas vorgesehen werden für ein Endoskop zur Kontrolle der Position der Kontakte.

Die Fig.4 zeigt eine stark vereinfachte schematische Darstellung des in Fig.2 eingetragenen Schnittes B-B durch einen ersten Pol des Leistungsschalters 6. Dieser Pol weist ein metallisches, isoliergasgefülltes Polgehäuse auf, welches sich aus mehreren Komponenten zusammensetzt, die druckdicht miteinander verbunden sind. Das Polgehäuse weist ein unten mit einem Deckelflansch 64 verschlossenes Gehäuseunterteil 18 auf, welches bei allen drei Polen eines dreipoligen Leistungsschalters 6 gleich ausgebildet ist, welches jedoch in unterschiedlicher Einbaulage verwendet wird. In das Gehäuseunterteil 18 ist jeweils eine Kontaktierungsbaugruppe 65 eingebaut. Diese Kontaktierungsbaugruppe 65 besteht jeweils aus den im Zusammenhang mit Fig.3 beschriebenen Teilen wie dem Verbindungsstück 23 mit der Abschirmung 24, dem Kontaktring 25, der Kontaktanordnung 26 und dem Kontaktträger 27 mit der Abschirmung 28. Die Kontaktierungsbaugruppe 65 ist einerseits mit dem Stromanschluss 21 des Schottungsisolators 19 steckbar verbunden und andererseits mit dem Stromanschluss 22 des Schottungsisolators 20 fest verbunden. Der Leistungsschalterpol weist eine Löschkammer 66 auf, die ein zylindrisch ausgebildetes, aus Metall hergestelltes und konzentrisch zur Polachse 13 angeordnetes Auspuffgehäuse 67 aufweist, welches in die Kontaktierungsbaugruppe 65 eingefahren ist und mit dieser über Gleitkontakte wie beispielsweise Spiralkontakte elektrisch leitend verbunden ist. Das Auspuffgehäuse 67 überträgt das Potential der Kontaktierungsbaugruppe 65 auf den unteren Teil der Löschkammer 66 und führt bei geschlossenem Leistungsschalterpol gleichzeitig den Betriebsstrom.

Auf das Gehäuseunterteil 18 ist ein Gehäuseoberteil 68 aufgesetzt, welches eine mit einem Schottungsisolator 69 druckdicht verschlossene, nicht bezeichnete Öffnung aufweist. Der Schottungsisolator 69 weist einen ihn durchdringenden Stromanschluss 70 auf, der einerseits mit den nicht dargestellten, sich in Richtung der Längsachse 14 erstreckenden, Aktivteilen des Abgangs elektrisch leitend verbunden ist, und der andererseits über einen Messerkontakt 71 mit dem oberen Teil 72 der Löschkammer 66 verbunden ist. Der obere Teil 72 und der untere Teil der Löschkammer 66 werden durch einen Löschkammerisolator 73 zu einer Einheit verbunden. Der Löschkammerisolator 73 isoliert, wenn der Leistungsschalterpol ausgeschaltet ist, den oberen Teil 72 vom unteren Teil. Die Löschkammer 66 ist mittels eines Halteisolators 74 mit einem Gehäusedeckel 75 verbunden und wird durch diesen im Zentrum des Polgehäuses gehalten. Der Gehäusedeckel 75 wird mit dem Gehäuseoberteil 68 verbunden und schliesst das Polgehäuse nach oben ab. Der Gehäusedeckel 75 ist mit einer Berstscheibe 76 versehen, die im Notfall einen im Polgehäuse entstehenden Überdruck in die Umgebung entweichen lässt. An den Gehäusedeckel 75 ist ein Antrieb 77 für den Leistungsschalterpol angeflanscht. Der Antrieb 77 sitzt nicht auf der Polachse 13, er ist neben dem Polgehäuse angeordnet, und zwar auf der dem Abgang zum Kabelanschluss 10 entgegengesetzten Seite des Polgehäuses. Die Bauhöhe des Leistungsschalterpols wird so durch den Antrieb 77 nicht oder nur unwesentlich vergrössert. Der Antrieb 77 wirkt über eine schematisch angedeutete Kraftumsetzung auf eine isolierende Betätigungsstange 78 ein, welche die beweglichen Kontaktteile der Löschkammer 66 entlang der Polachse 13 bewegt. Bei der Montage wird die an dem Gehäusedeckel 75 hängende Löschkammer 66 von oben in das Polgehäuse so eingeführt, dass das Auspuffgehäuse 67 mit der Kontaktierungsbaugruppe 65 einwandfrei Kontakt bekommt, und dass der Messerkontakt 71 ebenfalls die Aktivteile des Abgangs zuverlässig mit dem oberen Teil 72 der Löschkammer 66 elektrisch verbindet.

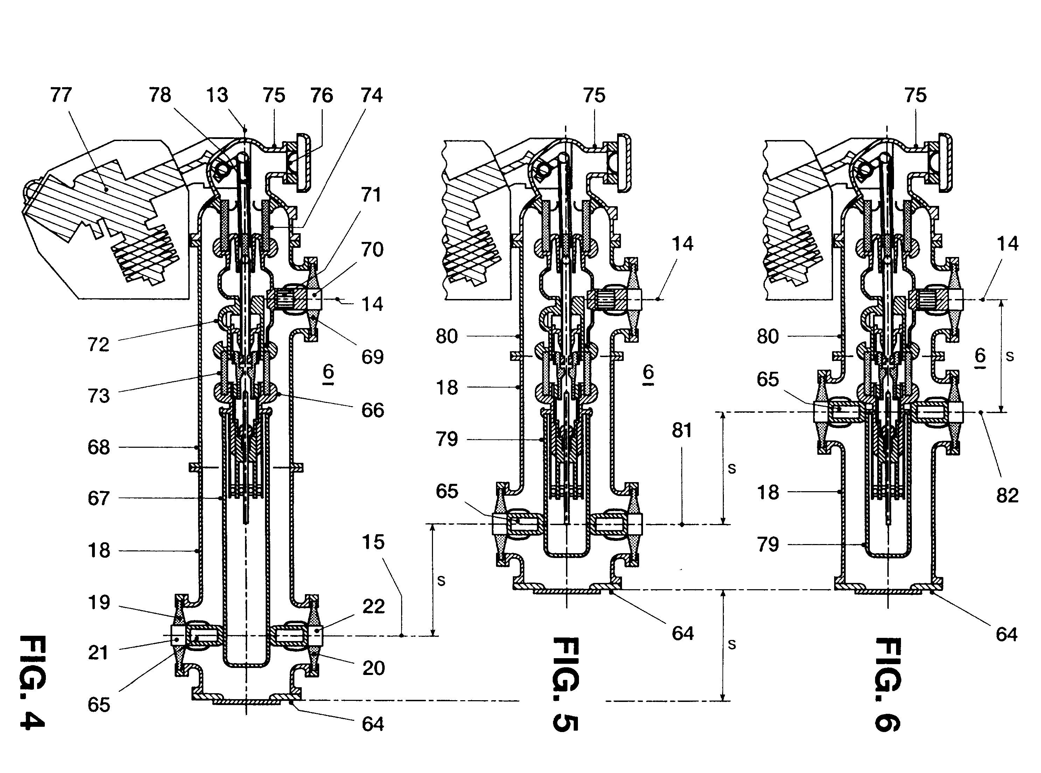

Die Fig.5 zeigt eine schematische Darstellung des in Fig.2 eingetragenen Schnittes C-C durch einen zweiten Leistungsschalterpol. Dieser Leistungsschalterpol weist ebenfalls ein metallisches, isoliergasgefülltes Polgehäuse auf, welches sich aus mehreren Komponenten zusammensetzt, die druckdicht miteinander verbunden sind. Die Längsachse 14 des Abgangs ist bei diesem Pol auf gleicher Höhe wie bei dem vorab beschriebenen Pol. Dieses Polgehäuse weist ein unten mit einem Deckelflansch 64 verschlossenes Gehäuseunterteil 18 auf, welches bei allen drei Polen des dreipoligen Leistungsschalters 6 gleich ausgebildet ist. Hier ist es in der gleichen Einbaulage eingebaut wie in dem Pol gemäss Fig. 4. In das Gehäuseunterteil 18 ist hier die gleiche Kontaktierungsbaugruppe 65 eingebaut. Die Kontaktierungsbaugruppe 65 stellt die elektrisch leitende Verbindung her zu einem Auspuffgehäuse 79. Das Gehäuseunterteil 18 ist mit einem Gehäuseoberteil 80 verbunden. Das Gehäuseoberteil 80 ist gegenüber dem entsprechenden Gehäuseoberteil 68 in Fig.4 und das Auspuffgehäuse 79 ist gegenüber dem entsprechenden Auspuffgehäuse 67 in Fig.4 jeweils um ein gleiches Mass s gekürzt ausgeführt. Das Mass s entspricht dem senkrechten Achsabstand der Sammelschienen 5. Die übrigen Bauelemente der beiden Schalterpole des Leistungsschalters 6 sind gleich ausgeführt.

Die Verkürzung der erwähnten Bauteile um das Mass s hat zur Folge, das der Leistungsschalterpol gemäss Fig.5 um eben dieses Mass s kürzer ist, und dass der Sammelschienenanschluss dieses Pols, der sich entlang einer Verbindungsachse 81 erstreckt, gegenüber der Verbindungsachse 15 um das Mass s nach oben versetzt ist.

Die Fig.6 zeigt eine schematische Darstellung des in Fig.2 eingetragenen Schnittes D-D durch einen dritten Pol des Leistungsschalters 6. Dieser Leistungsschalterpol weist ein metallisches, isoliergasgefülltes Polgehäuse auf, welches sich aus mehreren Komponenten zusammensetzt, die druckdicht miteinander verbunden sind. Die Längsachse 14 des Abgangs ist bei diesem Pol auf gleicher Höhe wie bei den beiden vorab beschriebenen Polen. Das Polgehäuse weist ein unten mit einem Deckelflansch 64 verschlossenes Gehäuseunterteil 18 auf, welches bei allen drei Polen des dreipoligen Leistungsschalters 6 genau gleich ausgebildet ist, welches bei diesem Pol jedoch um 180° gedreht gegenüber der Einbaulage in den anderen beiden Leistungsschalterpolen verwendet wird. In das Gehäuseunterteil 18 ist jeweils eine Kontaktierungsbaugruppe 65 eingebaut. Auch dieser Pol ist gegenüber dem Pol gemäss Fig.4 um dass Mass s kürzer.

Die Drehung des Gehäuseunterteils 18 um einen Winkel von 180° um eine parallel zu Verbindungsachse 82 verlaufende Achse hat zur Folge, dass der Sammelschienenanschluss dieses Pols, der sich entlang einer Verbindungsachse 82 erstreckt, gegenüber der Verbindungsachse 15 um zwei Mal das Mass s nach oben versetzt ist, und gegenüber der Verbindungsachse 81 um eben dieses Mass s nach oben versetzt ist. Die Verbindungsachse 82 weist zur Längsachse 14, die bei allen drei Leistungsschalterpolen in gleicher Höhe angeordnet ist, einen Abstand auf, der dem Mass s entspricht.

Der Pol gemäss Fig.4 ist, wie aus Fig.1 ersichtlich, auf dem Tragrahmen 2 befestigt. Die anderen beiden Pole, die jeweils um das Mass s kürzer sind, werden auf einem mit dem Tragrahmen 2 verbundenen, nicht dargestellten Podest montiert, welches so hoch ist, dass der erwähnte Massunterschied ausgeglichen wird. Das Podest ist aus Profileisen zusammengeschweisst, es ist sehr preisgünstig und mit wenig Aufwand zu erstellen. Ausser dem Podest, dem um das Mass s verlängerten Gehäuseoberteil 68 und dem um ebenfalls das Mass s verlängerten Auspuffgehäuse 67 sind keine weiteren modifizierten Bauteile nötig, um die bei einer konventionell aufgebauten metallgekapselten gasisolierten Schaltanlage stets benutzten, unterschiedlich langen und aufwendigen Verbindungsstücke zwischen den Leistungsschalterpolen und den diesen zugeordneten Sammelschienen überflüssig zu machen.

Bei der erfindungsgemässen metallgekapselten gasisolierten Schaltanlage sind die Polachsen 13 in einer Ebene angeordnet. Die Polachsen 13 verlaufen senkrecht zum Fundament 4. Die Sammelschienenachsen 12 eines Sammelschienensystems sind ebenfalls in einer Ebene senkrecht zum Fundament 4 angeordnet, doch verlaufen die Sammelschienenachsen 12 parallel zu der Oberfläche des Fundaments 4. Wird eine gasisolierte Schaltanlage mit nur einem Sammelschienensystem erstellt, so kann dieses wahlweise auf der einen oder auf der anderen Seite der Ebene der Polachsen 13 des Leistungsschalters 6 angeordnet werden. Für spezielle Anwendungsfälle ist es auch möglich, nur eine der Sammelschienen des Systems auf der gegenüberliegenden Seite der Ebene der Polachsen 13 zu führen. Wird die gasisolierte Schaltanlage mit einem Doppelsammelschienensystem ausgerüstet, so werden die Sammelschienensysteme in der Regel zu beiden Seiten der Ebene der Polachsen 13 des Leistungsschalters 6 und in gleichem Abstand zu dieser angeordnet. Durch diese Zuordnung der Sammelschienen 5 in zu den Polachsen 13 der Leistungsschalter 6 parallele Ebenen ist eine besonders platzsparende Anordnung der Sammelschienenanschlüsse möglich, sie können auf einer Diagonalen angeordnet werden.

Eine besonders kompakte Anordnung der gasisolierten Schaltanlage ergibt sich dann, wenn der Abstand zwischen benachbarten Sammelschienenachsen 12, der dem Mass s entspricht, gleich gross wie der Abstand zwischen benachbarten Polachsen 13 gewählt wird. Die Verbindungslinie zwischen den Verbindungsachsen 15,81 und 82 weist dann gegenüber der Richtung der Sammelschienenachsen 12 einen Winkel von 45° auf. Durch diese Anordnung der Anschlüsse wird eine erhöhte Flexibilität bei der Projektierung von metallgekapselten gasisolierten Schaltanlagen erreicht und zudem eine vorteilhafte Reduzierung der Anzahl der für diese gasisolierten Schaltanlagen benötigten Bauteile.

Die beschriebenen Veränderungen der Baulänge des Polgehäuses des Pols gemäss Fig.4 können auch auf andere Art erreicht werden. Anstatt des verlängerten Gehäuseoberteils 68 kann beispielsweise ein kürzeres Gehäuseoberteil 80 eingebaut werden, wie es in den anderen beiden Polen eingesetzt ist, nur muss dann entweder das Gehäuseunterteil in diesem Pol entsprechend nach oben verlängert oder ein entsprechend bemessener Zwischenring zwischen dem kürzeren Gehäuseoberteil 80 und dem Gehäuseunterteil 18 eingefügt werden.

### BEZEICHNUNGSLISTE

- 1: Abgangsfeld
- 2: Tragrahmen
- 3: Winkelprofile
- 4: Fundament
- 5: Sammelschienen
- 6: Leistungsschalter
- 7: Stromwandler
- 8: Trenner
- 9: Spannungswandler
- 10: Kabelanschluss
- 11: Hochspannungskabel
- 12: Sammelschienenachsen
- 13: Polachse
- 14: Längsachse
- 15: Verbindungsachse
- 16: Erder
- 17: zentraler Punkt
- 18: Gehäuseunterteil
- 19,20: Schottungsisolator
- 21,22: Stromanschluss
- 23: Verbindungsstück
- 24: Abschirmung
- 25: Kontaktring
- 26: Kontaktanordnung
- 27: Kontaktträger
- 28: Abschirmung 28
- 29: Gehäuse
- 30: Trenner
- 31 bis 35: Flansch
- 36: Abdeckung
- 37,38: Flansch
- 39: Isolierstoffstange
- 40: Trennerantrieb
- 41: bewegliche Kontaktanordnung
- 42: Abschirmung
- 43: Schottungsisolator
- 44: Stromanschluss
- 45: Leiterstück
- 46: Abschirmung
- 47: Kontaktträger
- 48: Gleitkontakt
- 49: Leiterstück
- 50: Kontaktträger
- 51: Abschirmung
- 52,53: Gegenkontakt
- 54: Einbauachse
- 55: Kontaktstift
- 56: Abstand
- 57: Berstscheibe
- 58: Gehäuse
- 59: Flansch
- 60: Einbauachse
- 61: Deckel
- 62: Kontaktträger
- 63: Gegenkontakt
- 64: Deckelflansch
- 65: Kontaktierungsbaugruppe
- 66: Löschkammer
- 67: Auspuffgehäuse
- 68: Gehäuseoberteil
- 69: Schottungsisolator
- 70: Stromanschluss
- 71: Messerkontakt
- 72: oberer Teil
- 73: Löschkammerisolator
- 74: Halteisolator
- 75: Gehäusedeckel
- 76: Berstscheibe
- 77: Antrieb
- 78: Betätigungsstange
- 79: Auspuffgehäuse
- 80: Gehäuseoberteil
- 81,82: Verbindungsachse
- s: Achsabstand der Sammelschienen

## Patentansprüche

1. Metallgekapselte gasisolierte Schaltanlage mit mindestens zwei Sammelschienensystemen, mit einem Leistungsschalter (6), der pro Pol jeweils eine Polachse (13) und mindestens eine in ein Polgehäuse eingebaute Löschkammer (66) aufweist und dessen Polachsen (13) senkrecht zu einem Fundament (4) angeordnet sind und in einer ersten Ebene liegen, mit jeweils einer entlang einer Verbindungsachse (15,81,82) erstreckten elektrisch leitenden Verbindung der spannungsführenden Löschkammer (66) des jeweiligen Pols mit jedem der Sammelschienensysteme, mit jeweils einem in der Verbindung zwischen der jeweiligen Sammelschiene (5) und dem Pol angeordneten Trenner (30), wobei die Sammelschienenachsen (12) der mindestens zwei Sammelschienensysteme parallel zur Fundamentfläche verlaufen und in jeweils einer zweiten und in einer dritten Ebene liegen, die zueinander parallel verlaufen, wobei die erste Ebene, in welcher die Polachsen (13) liegen, zwischen der zweiten und der dritten Ebene und parallel zu diesen Ebenen angeordnet ist, wobei die Verbindungsachse (15,81,82) senkrecht zu diesen Ebenen verläuft, und wobei die elektrisch leitende Verbindung zwischen den Sammelschienensystemen auch nach dem Ausbau der Löschkammer (66) aus dem Polgehäuse aufrecht erhalten bleibt, dadurch gekennzeichnet,
- dass die in der elektrisch leitenden Verbindung angeordneten Trenner (30) jeweils auf der dem Leistungsschalter (6) zugewandten Seite einen feststehenden Gegenkontakt (52,63) aufweisen,
- dass diese Gegenkontakte (52,63) stets auf gleichem Potential liegen, und
- dass diese Gegenkontakte (52,63) mittels eines zwischen dem Pol und den Trennern (30) angeordneten Erders (16) an Erde legbar sind.

2. Metallgekapselte gasisolierte Schaltanlage nach Anspruch 1, dadurch gekennzeichnet,
- dass diese elektrisch leitende Verbindung eine im Innern des Polgehäuses angeordnete Kontaktierungsbaugruppe (65) mit einem Kontaktring (25) aufweist, der die Polachse (13) konzentrisch umgibt.

3. Metallgekapselte gasisolierte Schaltanlage nach Anspruch 2, dadurch gekennzeichnet,
- dass der Kontaktring (25) einerseits über ein Verbindungsstück (23) fest mit einem einen ersten Schottungsisolator (20) durchdringenden ersten Stromanschluss (22) verbunden ist, und andererseits steckbar mit einem einen zweiten Schottungsisolator (19) durchdringenden zweiten Stromanschluss (21) verbunden ist.

4. Metallgekapselte gasisolierte Schaltanlage nach Anspruch 3, dadurch gekennzeichnet,
- dass der Kontaktring (25) im Innern ein mit der Löschkammer (66) elektrisch leitend verbundenes Auspuffgehäuse (67,79) kontaktiert.

5. Metallgekapselte gasisolierte Schaltanlage nach Anspruch 1, dadurch gekennzeichnet,
- dass die Löschkammer (66) nach oben aus dem Polgehäuse ausfahrbar gestaltet ist.

6. Metallgekapselte gasisolierte Schaltanlage nach Anspruch 1, dadurch gekennzeichnet,
- dass der Leistungsschalter (6) pro Pol mit einem separaten Antrieb (77) ausgestattet ist, und
- dass dieser Antrieb (77) nicht axial zur Polachse (13) angeordnet ist.

7. Metallgekapselte gasisolierte Schaltanlage nach Anspruch 6, dadurch gekennzeichnet,
- dass der Antrieb (77) oben neben dem Polgehäuse angeordnet ist, und
- dass der Antrieb (77) auf der dem Abgang zu einem Kabelanschluss (10) entgegengesetzten Seite des Polgehäuses angeordnet ist.

8. Metallgekapselte gasisolierte Schaltanlage nach Anspruch 1, dadurch gekennzeichnet,
- dass die Trenner (30) als Winkeltrenner ausgebildet sind.

## Claims

1. Metal-enclosed gas-insulated switching installation having at least two busbar systems, having one circuit breaker (6) which exhibits for each pole in each case one pole axis (13) and at least one extinction chamber (66) installed in a pole housing and the pole axes (13) of which are arranged perpendicularly to a foundation (4) and are located in a first plane, having in each case one electrically conductive connection, extending along a connecting axis (15, 81, 82), of the voltage-carrying extinction chamber (66) of the respective pole to each of the busbar systems, having in each case one isolator (30) arranged in the connection between the respective busbar (5) and the pole, the busbar axes (12) of the at least two busbar systems extending in parallel with the surface of the foundation and being located in each case in a second and a third plane which extend parallel to one another, the first plane in which the pole axes (13) are located being arranged between the second and third plane and parallel to these planes, the connecting axis (15, 81, 82) extending perpendicularly to these planes, and the electrically conductive connection between the busbar systems also being maintained after the extinction chamber (66) has been removed from the pole housing, characterized
- in that the isolators (30) arranged in the electrically conductive connection in each case exhibit a fixed counter contact (52, 63) on the side facing the circuit breaker (6),
- in that these counter contacts (52, 63) are always at the same potential, and
- in that these counter contacts (52, 63) can be connected to earth by means of an earth electrode (16) arranged between the pole and the isolators (30).

2. Metal-enclosed gas-insulated switching installation according to Claim 1, characterized
- in that this electrically conductive connection exhibits a contact assembly (65), arranged in the interior of the pole housing, with a contact ring (25) which concentrically surrounds the pole axis (13).

3. Metal-enclosed gas-insulated switching installation according to Claim 2, characterized
- in that, the contact ring (25) is connected permanently via a link (23) to a first supply terminal (22) penetrating a first separating insulator (20), on the one hand, and, on the other hand, is connected in a plug-in manner to a second supply terminal (21) penetrating a second separating insulator (19).

4. Metal-enclosed gas-insulated switching installation according to Claim 3, characterized
- in that the contact ring (25) contacts an exhaust casing (67, 79), electrically conductively connected to the extinction chamber (66) in the interior.

5. Metal-enclosed gas-insulated switching installation according to Claim 1, characterized
- in that the extinction chamber (66) is designed to be removable in an upward direction out of the pole housing.

6. Metal-enclosed gas-insulated switching installation according to Claim 1, characterized
- in that the circuit breaker (6) is equipped with a separate drive (77) for each pole, and
- in that this drive (77) is not arranged axially with respect to the pole axis (13).

7. Metal-enclosed gas-insulated switching installation according to Claim 6, characterized
- in that the drive (77) is arranged at the top adjacently to the pole housing, and
- in that the drive (77) is arranged on the side of the pole housing opposite the outgoing feeder to a cable terminal (10).

8. Metal-enclosed gas-insulated switching installation according to Claim 1, characterized
- in that the isolator (30) is constructed as angle isolator.

## Revendications

1. Installation de commutation à blindage métallique et isolement gazeux comportant au moins deux systèmes de barres omnibus, un disjoncteur de puissance (6), qui présente pour chaque pôle, respectivement, un axe polaire (13) et au moins une chambre d'extinction (66) incorporée à un boîtier polaire et dont les axes polaires (13) sont agencés perpendiculairement à une plaque de fondation (4) et se trouvent dans un premier plan, avec respectivement une connexion conductrice de l'électricité, s'étendant le long d'un axe de jonction (15, 81, 82), de la chambre d'extinction sous tension (66) du pôle respectif avec chacun des systèmes de barres omnibus, avec respectivement un sectionneur (30) agencé dans la connexion entre la barre omnibus respective (5) et le pôle, les axes (12) des barres omnibus des au moins deux systèmes de barres omnibus s'étendant parallèlement à la surface de la plaque de fondation et se trouvant dans respectivement un deuxième et un troisième plans, qui s'étendent parallèlement l'un à l'autre, le premier plan, dans lequel les axes polaires (13) se trouvent, étant agencé entre le deuxième et le troisième plans et parallèlement à ces plans, l'axe de jonction (15, 81, 82) s'étendant perpendiculairement à ces plans, et la connexion conductrice de l'électricité entre les systèmes de barres omnibus subsistant même après l'extraction de la chambre d'extinction (66) hors du boîtier polaire, caractérisée en ce que :
- le sectionneur (30) agencé dans la connexion conductrice de l'électricité présente respectivement, sur le côté tourné vers le disjoncteur de puissance (6), un contre-contact fixe (52, 63),
- ces contre-contacts (52, 63) se trouvent toujours au même potentiel, et
- ces contre-contacts (52, 63) peuvent être mis à la terre au moyen d'une terre (16) agencée entre le pôle et les sectionneurs (30).

2. Installation de commutation à blindage métallique et isolement gazeux selon la revendication 1, caractérisée en ce que :
- cette connexion conductrice de l'électricité présente un ensemble de mise en contact (65) agencé à l'intérieur du boîtier polaire avec un anneau de contact (25), qui entoure concentriquement l'axe polaire (13).

3. Installation de commutation à blindage métallique et isolement gazeux selon la revendication 2, caractérisée en ce que :
- l'anneau de contact (25) est raccordé, d'une part, via un connecteur (23) de manière fixe à une première connexion de courant (22) traversant un premier isolateur de cloison (20) et, d'autre part, raccordé de manière enfichable à une seconde connexion de courant (21) traversant un deuxième isolateur de cloison (19).

4. Installation de commutation à blindage métallique et isolement gazeux selon la revendication 3, caractérisée en ce que :
- l'anneau de contact (25) est mis en contact, à l'intérieur, avec un boîtier d'échappement (67, 79) connecté de manière conductrice de l'électricité à la chambre d'extinction (66).

5. Installation de commutation à blindage métallique et isolement gazeux selon la revendication 1, caractérisée en ce que :
- la chambre d'extinction (66) est conformée de manière à pouvoir être extraite vers le haut hors du boîtier polaire.

6. Installation de commutation à blindage métallique et isolement gazeux selon la revendication 1, caractérisée en ce que :
- le disjoncteur de puissance (6) est équipé pour chaque pôle d'un entraînement séparé (77), et
- cet entraînement (77) n'est pas agencé axialement vis-à-vis de l'axe polaire (13).

7. Installation de commutation à blindage métallique et isolement gazeux selon la revendication 6, caractérisée en ce que :
- l'entraînement (77) est agencé dans la partie supérieure à côté du boîtier polaire, et
- l'entraînement (77) est agencé sur le côté du boîtier polaire opposé à la sortie d'une connexion de câble (10).

8. Installation de commutation à blindage métallique et isolement gazeux selon la revendication 1, caractérisée en ce que :
- les sectionneurs (30) se présentent sous la forme de sectionneurs angulaires.
